(19) Europäisches Patentamt European Patent Office Office européen des brevets

(11) **EP 3 958 187 A1**

(12) **EUROPEAN PATENT APPLICATION**

(43) Date of publication:
**23.02.2022 Bulletin 2022/08**

(21) Application number: **20275134.3**

(22) Date of filing: **20.08.2020**

(51) International Patent Classification (IPC):
**G06N 7/00** $^{(2006.01)}$  **G06N 20/10** $^{(2019.01)}$
**G06N 5/04** $^{(2006.01)}$

(52) Cooperative Patent Classification (CPC):
**G06N 7/005; G06N 20/10;** G06N 5/046

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **DEPEWEG, Stefan 81673 München (DE)**
• **EK, Carl Henrik BS81UB Bristol (GB)**
• **KAISER, Markus 80539 München (DE)**
• **OTTE, Clemans 81739 München (DE)**

(54) **METHOD FOR SUPERVISING A FUNCTION OF A TECHNICAL SYSTEM AND SUPERVISING UNIT**

(57)    The invention relates to a method for supervising a function of a technical system, the technical system using a plurality of sensors, each sensor providing measured sensor data ($y_i$) containing sensor specific information, comprising the following steps:
a) Deriving sensor data from a latent representation (x) describing the function of the technical system,
said latent representation (x) being derived by applying a model trained by Bayesian machine learning using the measured sensor data, wherein the latent representation x, mapping functions (f) and weights ($w_{ij}$) are together optimized, said latent representation (x) containing one latent information vector for each time instant, which represents the function of the technical system at that time instant,
said sensor data being derived by starting from the latent information vector and multiplying it with a sensor specific weight vector ($w_i$) and applying an inverse mapping function ($f_i^{-1}$),
wherein the weights ($w_{ij}$) depend on the specific sensor of the plurality of sensors and a dimension of the latent information vector,
said weights ($w_{ij}$) denoting the relevance of a sensor for information encoded in the said dimension of the latent information vector (x), and
whereby most of the weight ($w_{ij}$) values are 0;
b) Using the sensor data derived from the latent representation (x) for supervising the technical system.

FIG 1

## Description

The invention relates to a method for supervising a function of a technical system and a supervising unit for supervising a function of a technical system. The invention further relates to a technical system and a computer program product.

## Field of the Invention

In many industrial environments, a large set of sensor measurements is available which describe the current state of the system.

For example, gas turbines may be equipped with up to 10000 sensors, providing 10000-dimensional input vectors for a data analysis.

Another example is a production system, for which a large number of sensors is used to measure various physical or chemical values along or around the production line.

This amount of data is difficult to assess.

It is therefore an object of the invention to enhance the assessment of such data amounts or/and to reduce the costs associated with such data amounts or/and to more efficiently supervise a technical system.

## Brief Summary of the Invention

This is solved by what is disclosed in the independent claims. Advantageous embodiments are subject of the dependent claims.

The invention relates to a method for supervising a function of a technical system. This system uses a plurality of sensor, i.e. at least two sensors.

"Using a plurality of sensors" means that the data of these sensors can be accessed, e.g. because they are stored somewhere or that the system is equipped with these sensors, e.g. the sensors are connected wirebound or wireless to the technical system.

These sensors provide sensor data with sensor specific information, e.g. a pressure, turbulence or temperature measurement associated with further parameters such as accuracy of measurement. At least a part of the sensor data are used for the determination of a latent representation describing the function of the technical system, e.g. the combustion process in a turbine system.

Using the collected sensor data, a model can be trained by Bayesian machine learning in which the latent representation, mapping functions for the sensor data and weights are together optimized with the goal that all sensor data can be reliably reproduced.

The latent representation comprises one latent information vector for each time instant, that is regarded, e.g. each time of measurement or e.g. time points in predefined time intervals. The latent information vector describes the function of the technical system at that time instant. Sensor data are derived from the latent information vector by multiplying it with a sensor specific weight vector and applying an inverse, in particular sensor specific, mapping function.

The individual weights in the sensor specific weight vector depend on the sensor and on which dimension of the latent information vector is considered and reflect a relevance of a sensor for the information encoded in the respective dimension.

For example, if a weight is 0 for a certain sensor and a certain dimension, this sensor does not contribute to information encoded in said dimension of the latent information vector.

Most of the weight values are 0. For example, this can be achieved by choosing them according to a Dirichlet process. This has the advantage that the latent space representation can be interpreted intuitively.

The latent representation can thus be seen as "condensed" information on the technical function of the system. Hence it can be used for supervising the performance of the system, e.g. to monitor relevant sensor data, to identify defective sensors, whose values deviate from expected ones or to define virtual soft sensors which comprise two or more real sensors and provide tailored data. It is an advantage to apply such a method using a model trained by Bayesian machine learning to a technical system with a plurality of sensors, because in this way e.g. predictions with related uncertainties can be obtained.

Advantages of the proposed method are e.g. that an identification of redundant sensors by using the latent representation is possible. Furthermore, non-linearities in the dependencies of the sensor data can be accounted for. Even further, uncertainties are encoded in the latent representation which allows to select the most reliable set of sensor data. The information encoded in the latent representation can also be used for the construction of new systems.

According to an advantageous embodiment for the Bayesian machine learning meta information is considered, said meta information describing actual relation of the technical system or sensor data stemming from the technical system. E.g. the actual relation can be a physical or chemical relation.

The invention further relates to a supervising unit for a technical system, e.g. an energy production system which uses, e.g. turbines, or any other production system, e.g. for piece goods or not separable goods such as e.g. as liquids or gases, a purification system etc.

According to advantageous embodiment a technical system is a test or design system in which a future technical system can be tested.

Even further the invention relates to a technical system which is correspondingly supervised and computer program product for performing a supervision method.

**Brief description of the drawings:**

Further embodiments, features, and advantages of the present invention will become apparent from the subsequent description and dependent claims, taken in conjunction with the accompanying drawings of which show:

> **Fig.1** a schematic representation of relations between individual sensor values $y_i$, a mapping f of the sensor values and applying weights $w_i$ thereto, thus obtaining a latent information vector, which describes a dimension of the latent space x;

> **Fig. 2** a shared information matrix W whose entries $w_{ij}$ denote weights by which means the relevancy of sensor for a dimension of the latent space can be described, whereby encircled matrix entries $w_{ij}$ represent the dimensions necessary to reconstruct a sensor.

> **Fig. 3** a supervising unit working with a latent representation of dependencies between sensor data.

**Sensor Environment**

Different sensors often share information but can have varying degrees of accuracy or evaluation cost associated with them or also take measurements at different times or at different time intervals. Uncovering such shared information between sensors can be used to uncover redundant sensors or to formulate "soft sensors", where parts of the system are not directly measured but predicted from other sensor readings, thereby saving cost by reducing the number of required hardware components.

Another aspect is to define the smallest or cheapest or easiest accessible or most reliable set of inputs required to predict a specific output.

In the previously mentioned example of gas turbines being equipped with up to 10000 sensors, it is plausible that not all entries of the 10000-dimensional input vector for a data analysis are independent or carry unique information respectively. Instead, many sensors measure dependent effects and therefore share information.

This knowledge can then be applied to design soft sensors which require a low number of input dimensions to describe an effect.

For example, the combustion process happening inside of a gas turbine is a highly complex and stochastic process. Even though there exists an understanding about the underlying physics, predicting dynamics or describing causal relationships leading to changes in the dynamics is a hard task. The combustion dynamics leads to highly variable accelerations acting on the whole turbine which, if a certain threshold is exceeded, can damage or destroy a turbine. High combustion dynamics therefore must be avoided. The mentioned accelerations can be measured and are therefore part of the set of available sensors. With the help of the described method the problem of finding which other sensors contain information about these accelerations is addressed and finding a small but informative set of sensors to predict them.

Further examples besides reducing combustion dynamics, are reducing the amount of harmful emissions (e.g. NOx or CO) or increasing turbine efficiency. As the combustion dynamics described above, they can be described by suitably selected sensor measurements y and lead to similar tasks of identifying suitable sensor sets.

The non-directly, eventually hidden relations between sensors or- in other words- the shared information are contained in a description which is referred to as latent space x.

**Figure 1**

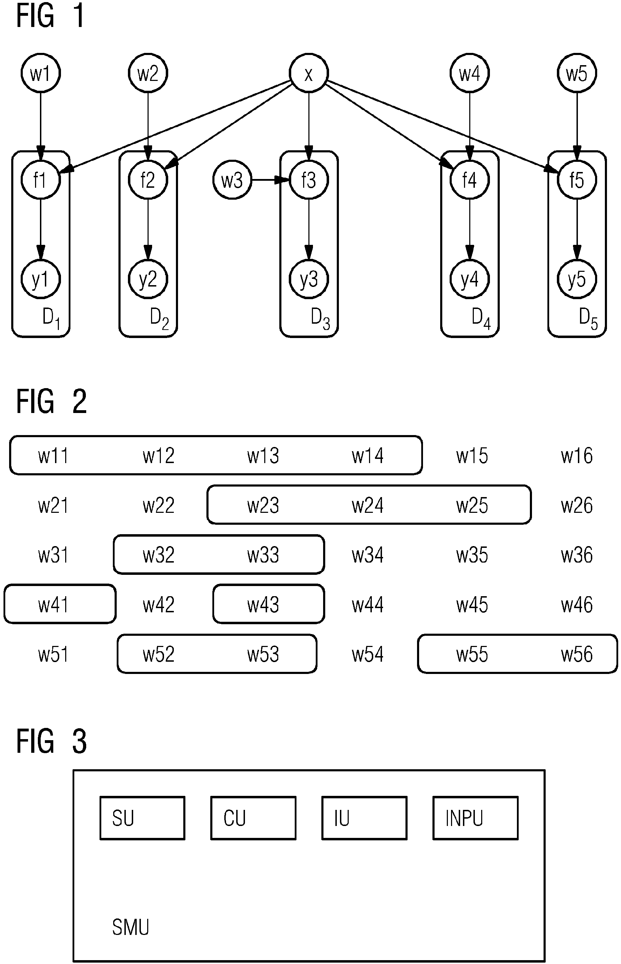

Fig.1 shows a schematic view of a relation between a latent space x, weights $w_i$, mapping function $f_i$, sensor values $y_i$ of sensors 1 to 5, whereby i denotes 1 to 5. The sensors provide data sets $D_i$, e.g. because they take data at different instants of time, e.g. every 10 s or because a sensor takes at one instant of time a whole set of data, e.g. pixels of a spatial detector, e.g. a pixel detector recording the light transmission through a combustion gas at different spatial positions of a tube diameter. Another example would be the temperature for different loads of a turbine.

In other words, D1-D5 denote that for each sensor values $y_1$ - $y_5$ a multitude of sensor values exists, e.g. over a certain time or/and over a certain space or/and other parameters of the system, such as load etc. The notation D1-D5 refers to a generative model which aims at finding the "true" data distribution for a set of data instances $y_i$ and their "target values" f ($y_i$) . The target values f ($y_i$) are those used to describe the latent space x taking into account their weight.

The dependencies between sensor data are encoded in the latent representation x as a set of vectors. It is called "latent" because it is not a direct view of the observables, i.e. the sensor data, but derived from the complete set or a subset of sensor data. The selection of the subset of sensor data depends on the relation that is to be investigated.

The latent space x represents information describing in a condensed way the function of the system, e.g. by merging information that is shared by more sensors. This information is in many cases multi-dimensional, as set out above, and contains numerical values. One reason behind that there is shared or redundant information across various sensors is that e.g. a temperature measurement is - for a given volume - equivalent to a pressure measurement due to the relation $p*V= nkT$. There are many other chemical or physical dependencies that can explain the existence of shared information.

Another example are two sensors measuring both the combustion dynamics parameters of a turbine, e.g. temperature and turbulences. Even if these combustions are in three dimensions too complex to be calculated and no explicit formula as above can be provided, information is shared between the two sensors as they have a common "source", namely the combustion process. The latent space x then advantageously maps key indicators of the combustion process, from which both, temperature and turbulences can be derived.

A "dependency" of two sensors is thus to be understood that they are dependent if knowledge retrieved or gathered from one sensor comprises -possibly imperfect or insufficient-knowledge about the other sensor.

The latent space x can be represented as a function F of the mapping functions $f_i$. A solution to that function F can often be found only at certain points. These mapping functions $f_i$ are applied on the respective sensor data $y_i$ and are weighted by weights $w_i$ assigned to a sensor i :

$$ x_{ij} = F \left( f_i \left( y_i \right), w_{ij} \right) $$

Hence, this shared information is not necessarily in the correct unity of measurement, i.e. it represents not a temperature value in degree Kelvin or a pressure in Pascal.

The mapping function $f_i$ is a calculation rule or formula to derive the sensor value $y_i$ from information from the latent space x.

It is the goal of a machine learning process to find suitable functions F, $f_i$ and weights $w_{ij}$ so that the available measurement values approximate. Having found those, this "model" can be used to predict values, to add missing values, to probe the integrity of a sensor etc. F ($f_i$ ($y_i$) ,$w_{ij}$) is also called training function of the machine learning model.

**Figure 2**

Shared information can be represented as a matrix from which it can be deduced, whether e.g. the information provided by sensor one is already contained in sensors two, three and four.

As said above, often there is shared information between some sensors, but not necessarily between all sensors. This information is contained in a shared information matrix W, of which an example is shown in **Fig. 2.**

The shared information matrix W denotes which dimension of latent space x or which vector $w_j$ of the shared information matrix W has to be taken for the calculation of the measurement value $y_i$ of sensor i, where i is a running variable.

The shared information matrix W shown in **Fig. 2** has entries $w_{ij}$ with i ranging from 1 to 5 and denoting a sensor, j ranging from 1 to 6 and denoting a dimension of the latent space x , which is represented by a latent information vector..

The entries $w_{ij}$ of one line of this matrix detail which latent dimensions of the latent space x are relevant for generating a sensor. If the entry $w_{ij}$ = 0 for line i= 1 and column j =5 or 6, then this means that the latent dimensions 5 and 6 do not carry information about sensor 1. The matrix entries in line 1 carry this information for sensor 1, the entries in line 2 for sensor 2 etc.

As said, the latent space x cannot be directly observed, but only modelled with the help of observables $y_i$, e.g. sensor values, weights and mapping functions. The other way around, sensor values can be calculated by taking the relevant latent information vectors.

For the start of a machine learning process, the dimension of the shared information matrix W is taken such, that it is certainly sufficient for the given monitoring/sensor scenario in order to allow a generative model to find a good solution.

The dimension of the latent representation x represents independent knowledge, in other words each column is independent from the others. This reflects the fact, that even if sensor data partly share information, still there can be independent components of the knowledge provided by individual sensors. Advantageously the machine learning is started with a number of degrees of freedom which is certainly sufficient and is then reduced in the course of the machine learning process. E.g. in the case of 5 sensors, 3 degrees of freedom or dimensions of the latent space might exist in the final model if there are strong dependencies between the sensors. According to another example the five sensors measure quite independently and consequently share few knowledge and the dimension of the latent space is ten in the finally obtained model.

In the shown example the shared information matrix W has 5 rows, each row relating to a sensor 1 to 5. The number of columns is taken as 6, which was in the shown example sufficient to account for the 5 sensors.

In Fig.2 entries, which are relevant for a sensor, are encircled, e.g. sensor 1 contributes to the dimension 1 to 4 of latent space x, sensor 2 to dimension 3,4 and 5 etc. In the example in Fig. 2 for calculating the sensor values of sensor 3 the second and the third column $w_j$ or - in other words, the second or third dimension of the latent space x would have to be taken.

If an entry of the shared information matrix $w_{ij}$ = 0, then this means that dimension j of the latent representation x is not used to represent view i, i.e. the i-th sensor.

If an entry of the shared information matrix $w_{ij} \neq 0$, then this means that dimension j of the latent representation x is used to represent view i, i.e. the i-th sensor.

If $w_{ij} \neq 0$, $w_{kj} \neq 0$, this means that dimension j of the latent representation is used to describe both view i and k or sensors i and k respectively, and does therefore contain shared information between the sensors i and k.

If according to an example, which is not depicted in Fig.2, two sensors would measure the same observables, then the same entries $w_{ij}$ would be encircled.

If two values of $w_{ij}$ would not be exactly the same but slightly deviate, this does not necessarily mean that the sensors measure completely different observables, but rather that one sensor is not sufficient to describe the other. The relation between the two sensors is expressed by the function F which is found as a result of the machine learning.

The structure of the shared matrix W described above means that it is encoding a factorization of the information represented in each view or stemming from each sensor respectively. By factorization is meant that the complex set of sensor data is grouped by sensors that share common data, i.e. have basically equivalent measurement values. "Basically equivalent" means that one measurement value may be represented by the other, however properties of the measurement values such as reliability might differ. Hence, each factor obtained by the factorization is independent, as there is no overlap between sensor data included in one factor and those of another factor.

Thus, the shared information matrix W allows to answer e.g. the following questions:

- if for two sensors or views i and k holds $w_{ij} = w_{kj}$ then this means that these views or sensors respectively contain the same information and can be considered redundant;
- if for a sensor or view i $w_{ij} \neq 0$ and $w_{kj} = 0$ for all other views k, then this means that the information in view i is only contained in this view. In other words, the measurements from sensor i are available only from its own measurements and cannot be derived from other measurements or data from other sensors.
- if view $w_i$ is representing a specific task that we want to infer from the other views, we know that the views or sensor data that contain the information about the task are the views which have non-zero elements, i.e. where $w_i$ is non-zero. In the example of Fig.2 sensor data for sensor 4 can be derived from sensor 1 (dimension j=1) and sensors 1,2,3,5 (dimensionr j=3).

For example, a representation of the latent space x using only sensors 1 to 3 is presumably not sufficient, because none of sensors 1 to 3 has information on $6^{th}$ dimension of latent space x represented in the $6^{th}$ column of the shared information matrix W. Hence, a rather good estimate of x for dimension 3, good results for dimensions 2 and 4 and satisfying results for dimension 1 and 5 can be achieved. This means that sensor 4 can be predicted safely, but not sensor 5 for whom a necessary dimension is not considered. This information enables to identify superfluous sensors, for example sensor 3 is replaced because it has shared information with sensors 1 and 5 for dimension 2 and shared information with sensors 1,2,4 and 5 for dimension 3.

Advantageously the associated uncertainties of the sensors and other constraints such as measurement frequency, cost, lifetime, reliability are considered: E.g. from shared information matrix W in **Fig.2** it can be deduced that it would seem sufficient to have sensors 1, 2 and 6, sensor 3 and 4 are not strictly necessary. However, it might be the case that e.g. more measurements of sensor 4 are available or sensor 3 is more reliable. Therefore, it might be reasonable to keep sensors 3 or/and 4 nevertheless. A basis for this decision to keep sensors 3 or/and 4 can be obtained by considering error propagation of the errors associated with the shared information matrix entries $w_{ij}$, the mapping functions f_i and thus those of the latent space x.

These are determined in a machine learning process. After an initialization, i.e. providing with starting values, and training, i.e. providing with training data to approximate the function F, a model or the approximated function F is obtained. This model can then be used for the monitoring of a system, the optimization of the monitoring and to predict key performance indicators to describe the function of a system

## MACHINE LEARNING TRAINING

### a) Initialisation

The detector measurements or observation variable is $y_i$ stemming from sensor i. It is a measured value and therefore known. Based on the observations of all sensors, the entries of the shared information matrix W, the calculation rules or mapping functions f and the latent space x, which are all unknown, are determined by a learning procedure. This means, by the learning procedure one seeks to approximate these entities such that - if going backwards and starting from latent space x - detector measurements or sensor data can be approximated.

For an exemplary machine learning procedure, one starts by initializing, in particularly arbitrarily within predefined boundaries, shared information matrix W, latent space x and mapping functions f with arbitrary values. Advantageously values are taken that reflect the situation in the complex technical system: The entries of the shared information matrix are between 0 and 1, the mapping formula f is a polynomial term in order to account also for non-linearities. A starting parameter for the latent space x is chosen close to zero.

Advantageously, entries in the $w_{ij}$ are chosen such that the values are $\neq 0,1$. This facilitates the training process.

### b) Actual machine learning training

Goal of the machine learning process is to provide a relation between the observables or sensor data. This can be achieved by using neuronal networks for the optimization task. As an input a very general training function $F(f_i (y_i), w_{ij}$ depending on the mapping functions f,

the sensor data $y_i$ and the weights $w_{ij}$, with a plurality of variables is provided. This training function may be changed by the neuronal network such that the desired output is reproduced, i.e. reflects the sensor data. This is repeated numerous times until this goal is achieved. In this case the training is completed, the general training function is now the previously mentioned function F describing the latent space. Advantageously as general input function a smooth function is used.

According to an advantageous embodiment the actual knowledge about real dependencies is considered in the general training function. Thus, the training time can be reduced and /or better results can be achieved, i.e. the output can be reproduced with a higher accuracy or with less training data. As an example, the physical or chemical relation between measurement values in reality is well known, in which case the general function can be simplified, such that e.g. only the exponential parameter of some polynomial term needs to be optimized.

According to another embodiment more sensor data are used. By increasing the amount of training data, very often the training results can be improved.

The training is completed as soon as emergent behavior is achieved, i.e. the sensor data can be reproduced reliably. To facilitate emergent behavior prior knowledge is considered during this process. As measurement values need to be reproduced furthermore it is advantageous if measurement uncertainties can be considered, too.

### c) Bayesian Machine learning

Machine learning models that can consider prior knowledge for the model that is to be created and uncertainties associated with values used within the network are for example "Bayesian Neural Networks" or Gaussian processes which have been known for some time. Any or at least some values used therein are not only single numerical value but include also an uncertainty assigned to that value. Error propagation can therefore be considered, which means for the shared information matrix W, that the values of $w_{ij}$ are assigned with an uncertainty, as this is the case with the measurement observables, i.e. the sensor data $y_i$, the mapping function $f_i$ and also the latent space x. Such Bayesian neural networks can be employed if e.g. only parts of a "real world" model, e.g. a physical or chemical model, are known and other parts should be derived therefrom with the associated uncertainties. An example therefore, which is easy to see, would be if temperature measurements are known only at two positions and the third one would have to be inter- or extrapolated.

The error associated with x may be derived by starting from the sensor value $y_i$ and computing it using the inverse function $f^{-1}$ thereby considering the errors associated with f and $y_i$. Thus, by this backward calculation an "uncertain" representation of x is obtained which comprises uncertainties/errors associated therewith. Using this uncertain representation of x, again new sensor values $y_i$ can be calculated.

According to an example depicted in **Fig.2,** the sensor data $y_1$ - $y_3$ are observed and using a backward computation an uncertain representation of the latent space x is obtained. By backward computation it is meant to calculate from the measurement values y back to the latent representation, whereas by forward computation the opposite direction is meant.

During the machine learning procedure these values are variated forwards or/and backwards such that the sensor measurement can be sufficiently reproduced.

In this way a model can be designed which maps or approximates certain processes that occur in the complex technical system and sensor values can be predicted that have not actually been measured.

### Fig. 3

In Fig. 3 a supervising unit SMU for supervising a function or/ and performance of a technical system equipped with a plurality of sensors is depicted.

This supervising unit SMU comprises or is alternatively connectable, wirebound or wireless, to a storing unit SU, a computational unit CU, an interface unit and optionally to an input unit.

In the storing unit SU sensor data are stored. In the computational unit CU, a latent representation x showing dependencies between sensor data or a subset thereof is available. This latent representation x has been derived by Bayesian machine learning as described before.

An interface unit IU is used for presenting information derived from the latent representation x, e.g. by grouping sensors according to their shared information or any other presentation that helps to capture the information more intuitively.

According to an advantageous embodiment, the supervising unit comprises further an input unit INPU. Based on these inputs the supervising is modified, e.g. a selection or/and discarding one or more sensors based on the derived latent representation can be done.

### Examples

In the following some further embodiments, examples and applications of the invention are provided. For example, the aforesaid means that the

- factorisation of the latent space provides information on which sensors contains redundant information, which allows to conclude whether the number of sensors can be reduced.
- The probabilistic model of the mapping, i.e. the considering of uncertainties, provides a measure of how reliable each sensor is. This means that reliable sensors in a redundant setting can be retained. As set out before, the observables $y_i$, the mapping function

$f_i$ and the weights or associations $w_{ij}$ have an uncertainty which and due to error propagation also the latent space x has an uncertainty as well as any predictions made on basis of the latent space x.

- Provided with a specific task, it can be determined which sensors can be used to predict the task, i.e. which sensors i have entries $w_{ij} \neq 0$ in the relevant j-th dimensions of the latent space. Thus, the relevant sensors can be monitored to solve a specific task.

The obtained model allows to tackle tasks such as listed below or/and combinations thereof:

- Missing values:

If one sensor is missing, the association or shared information matrix W gives information about which other sensors should be used to predict the missing one. A set of sensors which covers all latent dimensions of the missing sensor is needed. Thus, the created model can be used to calculate the sensor values which are unknown. As an example, in gas turbines so called "dynamic bands" are correlated and the analysis of their dependencies allows to complete missing information.

- Anomaly / faulty sensor detection:

Similar to the task to construct missing values, sensors which share information according to the shared information matrix W should provide informative about each other's measurements. If a specific sensor stops being informative (i.e. cannot be used for predictions anymore, because e.g. new measurements deviate significantly from the previous ones and therefore also the entries of the shared information matrix W change), it might be faulty. In this way, the integrity of a sensor may be checked. As an example, for a given model of the dependencies between sensors, an indicator for atypical behavior of a particular sensor is the amount of surprise of the sensor values with respect to the estimated dependencies, e.g. by a deviation of the sensor value or the time at which the sensor sends data.

- Dependency analysis:

If two sensors do not share any latent dimensions according to W, no dependencies between them have been uncovered. In the case where shared dimensions are found and as we train a generative model, the dependencies between sensors can be studied via perturbation studies in shared latent dimensions. E.g. it is investigated what happens if entries in the shared information matrix are changed a certain amount and in certain combinations with other values. For example, in gas turbines the dynamics bands are dependent on the turbine load, i.e. the amount of energy the turbines produce. The nature of this dependency is can be extracted from a dependency model.

- Feature selection:

The association or shared information matrix W directly encodes knowledge about informative subsets of features. These subsets can be used as a feature selection scheme, e.g. to determine the efficiency of a combustion process versus temperature. For example, the feature can be selected such that there are less measurement values associated with uncertainties in a formula for computation of an entity to be supervised. Cost of Deployment of industrial systems such as gas turbines: If a sensor can be perfectly described via other sensor values (like for the missing value scenarios), it might be redundant. Dependent on external factors such as the cost of sensors, an optimal set of sensors which can be used to predict all other sensors can be selected for deployment.

By the proposed method and system, in particular the following advantages can be achieved:

- Non-Linearity:

Many standard approaches to feature selection or dimensionality reduction are based on linear models. While those models are easy to train, many dependencies in complex dynamical systems are nonlinear and can therefore not be modelled using approaches like PCA (principal component analysis) which is the most common approach and makes an assumption that the observed data is normally distributed and that the relationship between the learned representation and the observed views is linear.

- Expert Independence:

Since a very high number of sensors is hard to handle, it is common to instead ask experts to select a smaller set of plausible sensors and to constrain data analysis to this smaller set. This process both potentially introduces errors in the analysis and can be expensive.

For example, a common approach in dynamics modelling is to first restrict the input set to a smaller set of sensors selected by domain experts and then use PCA to project the high-dimensional inputs on the first, e.g., 20 principal-component vectors, and to define a regression or classification model (e.g., neural network, Gaussian process, random forest, support vector machine) on the resulting 20-dimensional latent space representation. Disadvantageously the selection provided by domain experts can be incomplete. Furthermore, as another example, an unsupervised feature extraction like PCA/ICA/GPLVM is not guaranteed to give a latent representation that is optimal for solving the regression/classification problem. Supervised variants of PCA, where (unsupervised) PCA is applied only to inputs having a certain univariate correlation to the target are heuristic and often do not work well in practice.

By the proposed method and system handling of the complete sensor data is possible such that shared information independently of experts can be uncovered.

- Data Efficiency:

Combining the consideration of uncertainties during training and prediction and the incorporation of uncertainties, methods from Bayesian machine learning generally require less training data compared to the state of the art. Thus the following problem can be overcome: Deep-learning using the complete sensor data, particularly, convolutional neural networks, seek to find internal (latent) representations by incorporating the target information. Due to the high dimensionality of the input, such models tend to find spurious correlations in the training data which leads to poor performance.

- Interpretability:

As the obtained model is based on a generative process using the original sensor data, the result of training is a highly interpretable model. The learned shared information matrix W explicitly represents which sensors share information and allows us to answer questions like which sensors to consider for predictions. This result can be shared with domain experts for validations and further insight.

- Predictive uncertainties:

As Bayesian machine learning considers multiple plausible explanations for data in parallel, predictions are distributions over possible values. These distributions reflect the model's uncertainty about the correct underlying generative process and thus the correct prediction.

These uncertainties can be considered in subsequent steps when taking decisions based on the model's predictions.

**Further/Meta Information**

According to another example in addition to the latent space x which has to be learned in the machine learning procedure, there is additional meta information Z which is known and which enters, together with the sensor measurements, as input the machine learning procedure.

In the example of a turbine system this meta information Z can reflect information in which state the turbine is, e.g. in which state of the run-up phase.

In another example meta information reflects the position of a sensor, e.g. in which distance from the turbine a temperature sensor is positioned. For the approximation of the sensor values this meta information can enter e.g. in the calculation rule f. In the example with the temperature sensors the distance is hence a constant and the temperature behavior versus distance can be described by a formula.

For this example, the temperature behavior can then be explored at various distances from the turbine in order to e.g. chose suitable materials.

For another example, where values are taken at different turbine loads, e.g. 70, 80 percent of full load one could predict the situation at higher or lower loads, e.g. by extrapolations.

Another scenario that could be explored is that, if sensor values of sensors 1,2 and 3 are available, what would be then a reasonable value of sensor 4 or 5. Thus, defective or redundant sensors can be identified.

Although the present invention has been described in accordance with preferred embodiments or aspects thereof, it is obvious for the person skilled in the art that modifications or combination between the embodiments, fully or in one or more aspects, are possible in all embodiments.

Parts of the description have been presented in terms of operations performed by a computer system, using terms such as data and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system; and the term computer system includes general purpose as well as special purpose data processing machines, routers, bridges, switches, and the like, that are standalone, adjunct or embedded.

Additionally, various operations will be described as multiple discrete steps in turn in a manner that is helpful to understand the present invention. However, the order of description should not be construed as to imply that these operations are necessarily order dependent, in particular, the order of their presentation.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

**Claims**

1. Method for supervising a function of a technical system, the technical system using a plurality of sensors, each sensor providing measured sensor data ($y_i$) containing sensor specific information, comprising the following steps:

   a) Deriving sensor data from a latent representation (x) describing the function of the technical system,

said latent representation (x) being derived by applying a model trained by Bayesian machine learning using the measured sensor data, wherein the latent representation x, mapping functions (f) and weights ($w_{ij}$) are together optimized, said latent representation (x) containing one latent information vector for each time instant and representing the function of the technical system at that time instant,

said sensor data being derived by starting from the latent information vector and multiplying it with a sensor specific weight vector ($w_i$) and applying an inverse mapping function ($f_i^{-1}$),

wherein the weights ($w_{ij}$) depend on the specific sensor of the plurality of sensors and a dimension of the latent information vector,

said weights ($w_{ij}$) denoting the relevance of a sensor for information encoded in the said dimension of the latent information vector (x), and whereby most of the weight ($w_{ij}$) values are 0;

b) Using the sensor data derived from the latent representation (x) for supervising the technical system.

2. Method according to claim 1 wherein for the Bayesian machine learning a mapping function (f) is used which is based on Gaussian processes or Bayesian neural networks.

3. Method according to any of the previous claims wherein the weight values are chosen according to a Dirichlet process.

4. Method according to any of the previous claims wherein for the training additional meta information is considered which is used in the training in addition to the sensor data ($y_i$), in particular considering the meta information for the mapping function (f), said meta information being in particular known relations in the technical system or/and the sensor data therefrom.

5. Method according to any of the previous claims wherein the supervising in step b) comprises the exploration of dependencies between at least a subset of the plurality of sensors, so that redundancy or/and relevancy of sensor data can be determined.

6. Method according to any of the previous claims wherein the supervising in step b) comprises one or more of the following:

- removing one or more sensors or/and
- replacing one or more sensors by one or more other sensors or/and
- selecting one or more sensors for the observance of a specific performance of the technical system or/and

- the detection of anomalies and/or deficiencies of one or more sensors or/and
- the construction of sensor data of one or more sensors.

7. Method according to any of the previous claims, wherein from the supervising in step b) a result is derived, which is used for an adaption of the technical system.

8. Method according to the previous claim 7, wherein the adaption is the removal or addition of one or more sensors.

9. Method according to any of the previous claims, wherein the latent space (x) or/and the model is used for the construction of the technical system, in particular the equipment of the technical system with sensors or/and the construction of the technical system.

10. Supervising unit (SMU) for supervising a function/performance of a technical system using a plurality of sensors, comprising or connectable to a

- a storing unit (SU) for storing sensor data ($y_i$)
- a computational unit (CU) for which a latent representation (x) showing dependencies between sensor data or a subset thereof is available, said latent representation having been derived using a model trained by Bayesian machine learning
- an interface unit (IU) for presenting information derived from the latent information.

11. Supervising unit according to claim 10, further comprising an input unit (INPU) for selection or/and discarding one or more sensors based on the derived latent representation.

12. Supervising unit according to any of the previous claims 10 or 11, wherein the technical system is an energy production system, in particular a turbine system, or a production system or a test system or design system for any of the production systems.

13. Technical system, in particular a gas turbine system, a production system or a test system therefor, which is supervised using a method according to any of the previous claims 1 to 9 or/and a supervising unit according to any of the claims 10 to 12.

14. Computer program product for performing a method according to any of the claims 1 to 9.

15. Computer readable storage media with a computer program product according to the previous claim 14.

FIG 1

FIG 2

FIG 3

Europäisches
Patentamt

European
Patent Office

Office européen
des brevets

# EUROPEAN SEARCH REPORT

Application Number

EP 20 27 5134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANG QIKUN ET AL: "A Trust-based Mixture of Gaussian Processes Model for Reliable Regression in Participatory Sensing", PROCEEDINGS OF THE TWENTY-SIXTH INTERNATIONAL JOINT CONFERENCE ON ARTIFICIAL INTELLIGENCE, [Online] 19 August 2017 (2017-08-19), pages 3866-3872, XP055775027, California, US DOI: 10.24963/ijcai.2017/540 ISBN: 978-0-9992411-0-3 Retrieved from the Internet: URL:https://www.ijcai.org/Proceedings/2017/0540.pdf> [retrieved on 2021-02-11] * abstract * * page 3866 - page 3869 * * page 3871 - page 3871; figures 1, 4 * | 1-15 | INV. G06N7/00 G06N20/10 ADD. G06N5/04 |
| A | SARDANA NOEL ET AL: "A Bayesian Multiagent Trust Model for Social Networks", IEEE TRANSACTIONS ON COMPUTATIONAL SOCIAL SYSTEMS, IEEE, USA, vol. 5, no. 4, 3 December 2018 (2018-12-03), pages 995-1008, XP011699485, DOI: 10.1109/TCSS.2018.2879510 [retrieved on 2018-12-06] * the whole document * | 1-15 | |

-----

-----

-/--

| | TECHNICAL FIELDS SEARCHED (IPC) |
|---|---|
| | G06N |

The present search report has been drawn up for all claims

| Place of search | Date of completion of the search | Examiner |
|---|---|---|
| The Hague | 12 February 2021 | Tsakonas, Athanasios |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

| | Europäisches Patentamt<br>European Patent Office<br>Office européen des brevets | **EUROPEAN SEARCH REPORT** | Application Number<br>EP 20 27 5134 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Depeweg Stefan ET AL: "Modeling Epistemic and Aleatoric Uncertainty with Bayesian Neural Networks and Latent Variables", , 8 November 2019 (2019-11-08), XP055774689, Retrieved from the Internet: URL:https://mediatum.ub.tum.de/doc/1482483 /1482483.pdf [retrieved on 2021-02-10] * the whole document * | 1-15 | |
| A | TEACY W T LUKE ET AL: "An efficient and versatile approach to trust and reputation using hierarchical Bayesian modelling", ARTIFICIAL INTELLIGENCE, vol. 193, 7 September 2012 (2012-09-07), pages 149-185, XP028956010, ISSN: 0004-3702, DOI: 10.1016/J.ARTINT.2012.09.001 * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 12 February 2021 | Tsakonas, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)